# EUROPEAN PATENT APPLICATION

(11) **EP 3 785 951 A1**
(43) Date of publication of application: **03.03.2021**
(21) Application number: 20191567.5
(22) Date of filing: 18.08.2020
(51) Int. Cl.: B60H 1/00, B60H 1/32, B60K 11/08

(54) **VEHICLE AIR CONDITIONING APPARATUS**

(30) Priority: 29.08.2019 JP 2019156924
(71) Applicant: Valeo Japan Co., Ltd., Kumagaya-shi, Saitama 360-0193 (JP)
(72) Inventor: ISHINO, Hiroyuki, SAITAMA, 360-0193 (JP)
(74) Representative: Neuviale, Bertrand

(57) **Abstract**

A vehicle air conditioning apparatus has a compressor; a first heat exchanger which is disposed in an air conditioning unit and a damper of which adjusts an amount of ventilation; a second heat exchanger which is disposed on an air flow direction upstream side of the first heat exchanger; and a vehicle exterior heat exchanger which is disposed outside the vehicle interior, wherein it is possible, in response to the difference between a heat load to which a refrigeration cycle is subject and a target blowoff temperature, to switch between any operation modes out of: a heating operation mode; a dehumidification/heating operation mode which has one or both of two operations, a parallel operation in which a refrigerant heat dissipated in the first heat exchanger is branched into two, one of which, after being decompressed, is heat absorbed in the second heat exchanger, and the other of which, after being decompressed, is heat absorbed in the vehicle exterior heat exchanger, and a bypass operation in which the refrigerant heat dissipated in the first heat exchanger is decompressed without being branched and is heat absorbed only in the second heat exchanger; and a cooling operation mode.

## Description

### BACKGROUND OF THE INVENTION

### 1. Field of the Invention

The present invention relates to a vehicle air conditioning apparatus which has a dehumidification operation function, and particularly to a vehicle air conditioning apparatus which can secure a stable dehumidification operation in spite of a fluctuation in heat load.

### 2. Description of the Related Art

Heretofore, a vehicle air conditioning apparatus has been known which not only cools and heats the vehicle interior with a heat-pump refrigeration cycle but enables a dehumidification operation.

For example, Patent Literature 1 (JP-A-2014-094671) discloses a heat pump cycle which includes a refrigeration cycle in which a compressor, a first heat exchanger (a heat dissipator 4) which is disposed in an air conditioning unit and a damper (an air mix damper 28) of which adjusts an amount of ventilation, a first expansion device (an exterior expansion valve 6), a vehicle exterior heat exchanger (an exterior heat exchanger 7) which can exchange heat with the outside air, a second expansion device (an interior expansion valve 8), and a second heat exchanger (a heat absorber 9) which, being disposed in the air conditioning unit, is disposed on an air flow direction upstream side, in the air conditioning unit, of the first heat exchanger (heat dissipator 4), are connected to a loop at least in this order, wherein a refrigerant flow path between the first heat exchanger (heat dissipator 4) and the first expansion device (exterior expansion valve 6) and a refrigerant flow path between the vehicle exterior heat exchanger (exterior heat exchanger 7) and the second expansion device (interior expansion valve 8) are connected via a first bypass flow path (a refrigerant piping 13F) including a first refrigerant control section (an electromagnetic valve 22), and wherein, in the refrigerant flow path between the vehicle exterior heat exchanger (exterior heat exchanger 7) and the second expansion device (interior expansion valve 8), a refrigerant flow path on the upstream side of the confluence with the first bypass flow path (refrigerant piping 13F) and a refrigerant flow path between the second heat exchanger (heat absorber 9) and the compressor are connected via a second bypass flow path (a refrigerant piping 13D) including a second refrigerant control section (an electromagnetic valve 21).

Then, it is disclosed that the dehumidification operation includes: a dehumidification/heating operation mode in which to carry out one of a parallel operation (a first dehumidification/heating operation mode) in which a refrigerant discharged from the compressor is heat dissipated in the first heat exchanger (heat dissipator 4), and the heat dissipated refrigerant is branched into two, one of which, after being decompressed, is heat absorbed through the second heat exchanger, and the other of which, after being decompressed, is heat absorbed in the vehicle exterior heat exchanger, or a bypass operation (a second dehumidification/heating operation mode) in which the refrigerant discharged from the compressor is heat dissipated in the first heat exchanger, and the heat dissipated refrigerant, without being branched and after being decompressed, is heat absorbed only in the second heat exchanger; and
a series-flow operation (a dehumidification/cooling operation mode) in which the refrigerant discharged from the compressor is heat dissipated in the first heat exchanger, and the heat dissipated refrigerant, without being branched, is further heat dissipated in the vehicle exterior heat exchanger, subsequently is decompressed, and is heat absorbed in the second heat exchanger.

Patent Literature 1: JP-A-2014-094671

In the dehumidification operation, however, when the series-flow operation is carried out in which the refrigerant is heat dissipated by being circulated through the first heat exchanger and the vehicle exterior heat exchanger in sequence, and after being decompressed, is heat absorbed in the second heat exchanger, the vehicle exterior heat exchanger, in addition to the first heat exchanger, is also utilized as a heat absorber, so that when there is a change in vehicle speed or outside air temperature, the blown amount or the temperature of air supplied to the vehicle exterior heat exchanger changes, and it is not possible to secure a constant amount of heat dissipation.

Then, the vehicle air conditioning apparatus attempts to secure a constant amount of heat dissipation, so that a problem occurs in that the flow rate of refrigerant is adjusted by the first expansion device on the upstream side of the vehicle exterior heat exchanger, causing a fluctuation in the temperature of the air blown off from the air conditioning unit into the vehicle interior. Alternatively, a problem occurs in that the air mix door swings frequently to suppress a change in the temperature of the air blown off into the vehicle interior, and it is difficult to secure a stable dehumidification operation.

### SUMMARY OF THE INVENTION

The present invention, having been contrived taking into consideration these circumstances, has for its principal object to provide a vehicle air conditioning apparatus which can secure a stable dehumidification operation even though a heat load to which a vehicle exterior heat exchanger is subject changes when in dehumidification operation.

In order to achieve the heretofore mentioned object, the vehicle air conditioning apparatus according to the present invention includes a refrigeration cycle; and a control unit which controls switching between operation modes of the refrigeration cycle.

The refrigeration cycle includes at least a compressor which compresses a refrigerant; a first heat exchanger which is disposed in an air conditioning unit and a damper of which adjusts an amount of ventilation; a second heat exchanger which, being disposed in the air conditioning unit, is disposed on an air flow direction upstream side, in the air conditioning unit, of the first heat exchanger; and a vehicle exterior heat exchanger which, being disposed outside the vehicle interior, can exchange heat with the outside air.

In the vehicle air conditioning apparatus, the control unit, in response to the difference between a heat load to which the refrigeration cycle is subject and a target blowoff temperature, can switch between any operation modes out of:
a heating operation mode in which a refrigerant discharged from the compressor is heat dissipated in the first heat exchanger, and the heat dissipated refrigerant, after being decompressed, is heat absorbed in the vehicle exterior heat exchanger and not heat absorbed in the second heat exchanger;
a dehumidification/heating operation mode which has one or both of two operations, a parallel operation in which the refrigerant discharged from the compressor is heat dissipated in the first heat exchanger, and the heat dissipated refrigerant is branched into two, one of which, after being decompressed, is heat absorbed through the second heat exchanger, and the other of which, after being decompressed, is heat absorbed in the vehicle exterior heat exchanger, and a bypass operation in which the refrigerant discharged from the compressor is heat dissipated in the first heat exchanger, and the heat dissipated refrigerant, without being branched and after being decompressed, is heat absorbed only in the second heat exchanger; and
a cooling operation mode in which the refrigerant discharged from the compressor, without being heat dissipated in the first heat exchanger, is heat dissipated in the vehicle exterior heat exchanger, and the heat dissipated refrigerant, after being decompressed, is heat absorbed in the second heat exchanger.

Consequently, according to the heretofore described configuration, the first heat exchanger is used as a heat dissipator, the second heat exchanger is used as a heat absorber, and the vehicle exterior heat exchanger is used both as a heat dissipator and as a heat absorber, but in the dehumidification operation, a configuration is such as to carry out the dehumidification operation without utilizing an operation mode in which to use the first heat exchanger and the vehicle exterior heat exchanger each as a heat dissipator, that is, an operation mode (a series-flow dehumidification/cooling operation mode) in which the refrigerant discharged from the compressor is heat dissipated by being passed through the first heat exchanger and the vehicle exterior heat exchanger in series, subsequently is decompressed, and is heat absorbed in the second heat exchanger, so that it is possible to carry out a stable dehumidification operation even though there is a change in a heat load to which the vehicle exterior heat exchanger is subject.

Meanwhile, when a configuration is such as not to utilize the series-flow dehumidification/cooling operation mode, the dehumidification/cooling operation which complements the region between the dehumidification/heating operation and the cooling operation cannot be positively carried out, but in order to carry out the dehumidification/cooling operation, a configuration may be such as to further provide an operation mode in place of the heretofore known series-flow dehumidification/cooling operation mode.

That is, the vehicle air conditioning apparatus further includes a first dehumidification/cooling operation mode in which the refrigerant discharged from the compressor, without being heat dissipated in the first heat exchanger, is heat dissipated in the vehicle exterior heat exchanger, and the heat dissipated refrigerant, after being decompressed, is heat absorbed in the second heat exchanger, and in which endothermic performance in the second heat exchanger is made lower than in the cooling operation mode. A configuration may be such that the control unit can switch between any of the operation modes in response to the difference between the heat load to which the refrigeration cycle is subject and the target blowoff temperature.

By adding this kind of first dehumidification/cooling operation mode, the dehumidification operation in a heat load region, which the existing dehumidification/cooling operation mode has taken charge of, can be satisfied by, after forming the same operational state as in the cooling operation mode, making the endothermic performance (cooling performance) in the second heat exchanger lower than in the cooling operation mode, and it is possible to secure a stable dehumidification/cooling operation.

Here, a unit which makes the endothermic performance in the second heat exchanger lower than in the cooling operation may execute at least one of controls to
make the amount of discharge from the compressor smaller than in the cooling operation mode;
make the speed of rotation of a fan which adjusts the amount of ventilation to the vehicle exterior heat exchanger lower than in the cooling operation mode; and
make the degree of opening of an active grill shutter which adjusts the amount of ventilation to the vehicle exterior heat exchanger lower than in the cooling operation mode.

According to this kind of configuration, by reducing the amount of discharge from the compressor, it is possible to reduce the amount of refrigerant circulated and thus to reduce the endothermic performance in the second heat exchanger, while by reducing the amount of ventilation to the vehicle exterior heat exchanger (by reducing the speed of rotation of the fan which adjusts the amount of ventilation to the vehicle exterior heat exchanger or by reducing the degree of opening of the active grill shutter), it is possible to reduce the cooling performance (to reduce the endothermic performance in the second heat exchanger), enabling the dehumidification operation in the heat load region which the heretofore known dehumidification/cooling operation mode has taken charge of.

Also, the vehicle air conditioning apparatus further includes, as an operation mode in place of the heretofore known series-flow dehumidification/cooling operation mode, a second dehumidification/cooling operation mode (a series-flow dehumidification/cooling operation mode) in which the refrigerant discharged from the compressor is heat dissipated in the first heat exchanger, and the heat dissipated refrigerant is branched into two, one of which, after being decompressed, is heat absorbed in the second heat exchanger, and the other of which is decompressed after being further heat dissipated in the vehicle extension heat exchanger.

A configuration may be such that the control unit can switch between any of the operation modes in response to the difference between the heat load to which the refrigeration cycle is subject and the target blowoff temperature.

By adding this kind of parallel-flow dehumidification/cooling operation mode, one portion of the refrigerant having passed through the first heat exchanger, bypassing the vehicle exterior heat exchanger, is supplied to the second heat exchanger although the amount and the temperature of air supplied to the vehicle exterior heat exchanger are changed as needed, so that even though the endothermic performance in the vehicle exterior heat exchanger is changed, the heat exchangers in the air conditioning unit are not immediately affected or can be less affected even in the event of being affected. Therefore, a stable dehumidification operation can be secured.

Here, as a vehicle air conditioning apparatus for obtaining the heretofore described parallel-flow dehumidification/cooling operation mode,
the refrigeration cycle, having a first expansion device which can narrow, close, and fully open a refrigerant flow path and a second expansion device which can narrow and close a refrigerant flow path, can be as follows.

The compressor, the first heat exchanger, the first expansion device, the vehicle exterior heat exchanger, the second expansion device, and the second heat exchanger are connected to a loop at least in this order.

A refrigerant flow path between the first heat exchanger and the first expansion device and a refrigerant flow path between the vehicle exterior heat exchanger and the second expansion device are connected via a first bypass flow path including a first refrigerant control section.

A backflow prevention portion which stops the flow of refrigerant to the upstream side from a confluence with the first bypass flow path is provided in a portion, on the upstream side of the confluence, of the refrigerant flow path between the vehicle exterior heat exchanger and the second expansion device, and a refrigerant flow path between the vehicle exterior heat exchanger and the backflow prevention portion and a refrigerant flow path between the second heat exchanger and the compressor are connected via a second bypass flow path including a second refrigerant control section.

A third expansion device which can narrow and fully open a refrigerant flow path is provided in a portion, on the upstream side of a bifurcation to the second bypass flow path, of the refrigerant flow path between the vehicle exterior heat exchanger and the backflow prevention portion.

According to this kind of vehicle air conditioning apparatus, by adding the expansion device, which can narrow and fully open the refrigerant flow path, to the portion immediately downstream of the vehicle exterior heat exchanger, it is possible to form the parallel-flow second dehumidification/cooling operation mode, and thus possible, while securing the endothermic performance with the vehicle exterior heat exchanger used as a heat dissipator, to reduce the problem that a fluctuation in the heat load to which the vehicle exterior heat exchanger is subject can affect the heat exchangers in the air conditioning unit.

As heretofore described, according to the present invention, when carrying out the dehumidification operation mode, switching between the operation modes of the refrigerant cycle is controlled so as not to carry out the series-flow dehumidification/cooling operation mode, or switching between the operation modes of the refrigerant cycle is controlled by providing the dehumidification operation mode (the first or second dehumidification/cooling operation mode) in place of the series-flow dehumidification/cooling operation mode, so that it is possible to provide the vehicle air conditioning apparatus which can obtain a stable dehumidification operation even though there is a change in the outside air temperature or in the amount of ventilation to the vehicle exterior heat exchanger when in the dehumidification operation.

### BRIEF DESCRIPTION OF THE DRAWINGS

Figs. 1A and 1B represent an example of a vehicle air conditioning apparatus according to the present invention, wherein Fig. 1A is an overall configuration diagram thereof, and Fig. 1B is a table showing the states of expansion devices, on/off valves, and a damper on the basis of operation modes.
Fig. 2 is a diagram describing the flow of refrigerant when in a cooling operation mode in the vehicle air conditioning apparatus shown in Figs. 1A and 1B.
Fig. 3 is a diagram describing the flow of refrigerant when in a heating operation mode in the vehicle air conditioning apparatus shown in Figs. 1A and 1B.
Fig. 4 is a diagram describing the flow of refrigerant when in a dehumidification/heating operation mode in the vehicle air conditioning apparatus shown in Figs. 1A and 1B, and is a diagram showing the flow of refrigerant when in a dehumidification/heating operation mode (Parallel) in which a refrigerant is caused to flow in parallel by utilizing a first and a second bypass flow path.
Fig. 5 is a diagram describing the flow of refrigerant when in a dehumidification/heating operation mode in the vehicle air conditioning apparatus shown in Figs. 1A and 1B, and is a diagram showing the flow of refrigerant when in a dehumidification/heating operation mode (By-Pass) in which a refrigerant is caused to flow bypassing a vehicle exterior heat exchanger by utilizing the first bypass flow path.
Fig. 6 represents characteristic diagrams showing examples of controlling switching between the operation modes in Figs. 2 to 5 in response to the difference between a heat load to which a refrigeration cycle is subject and a target blowoff temperature.
Figs. 7A and 7B represent diagrams showing the flow of refrigerant when in an operation mode (a first dehumidification/cooling operation mode) in place of a series-flow dehumidification/cooling operation mode in the vehicle air conditioning apparatus shown in Figs. 1A and 1B.
Fig. 8 represents characteristic diagrams showing examples of controlling switching between the operation modes in Figs. 2 to 5 and Figs. 7A and 7B in response to the difference between the heat load to which the refrigeration cycle is subject and the target blowoff temperature.
Figs. 9A and 9A represent another example of the vehicle air conditioning apparatus according to the present invention, wherein Fig. 9A is an overall configuration diagram thereof and Fig. 9B is a table showing the states of expansion devices, on/off valves, and a damper on the basis of operation modes.
Fig. 10 is a diagram describing the flow of refrigerant when in a cooling operation mode in the vehicle air conditioning apparatus shown in Figs. 9A and 9B.
Fig. 11 is a diagram describing the flow of refrigerant when in a heating operation mode in the vehicle air conditioning apparatus shown in Figs. 9A and 9B.
Fig. 12 is a diagram describing the flow of refrigerant when in a dehumidification/heating operation mode in the vehicle air conditioning apparatus shown in Figs. 9A and 9B, and is a diagram showing the flow of refrigerant when in a dehumidification/heating operation mode (Parallel) in which a refrigerant is caused to flow in parallel by utilizing a first and a second bypass flow path.
Fig. 13 is a diagram describing the flow of refrigerant when in a dehumidification/heating operation mode in the vehicle air conditioning apparatus shown in Figs. 9A and 9B, and is a diagram showing the flow of refrigerant when in a dehumidification/heating operation mode (By-Pass) in which a refrigerant is caused to flow bypassing a vehicle exterior heat exchanger by utilizing the first bypass flow path.
Fig. 14 is a diagram showing the flow of refrigerant when in an operation mode (a second dehumidification/cooling operation mode) in place of a series-flow dehumidification/cooling operation mode in the vehicle air conditioning apparatus shown in Figs. 9A and 9B.

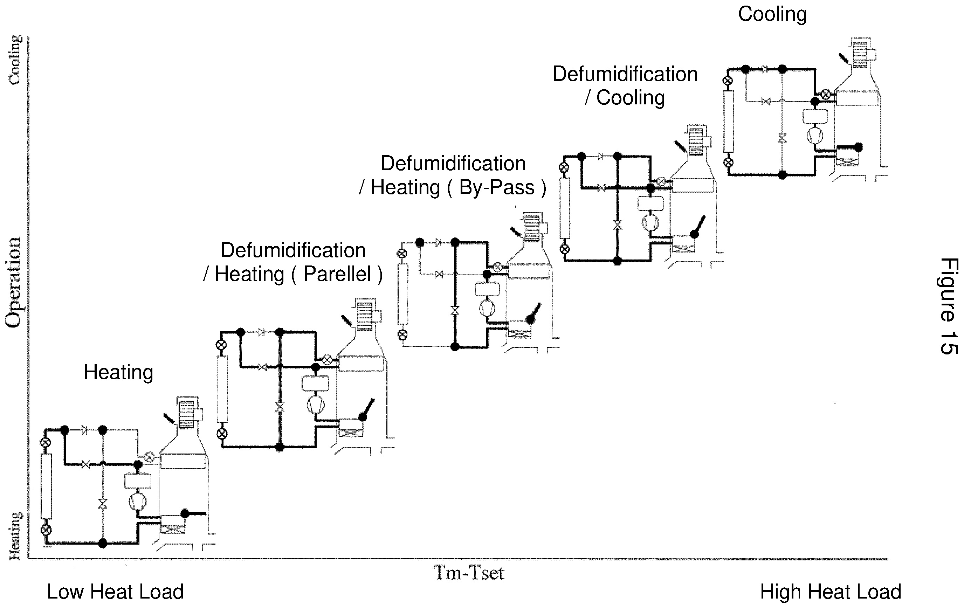

Fig. 15 represents characteristic diagrams showing examples of controlling switching between the operation modes in Figs. 10 to 14 in response to the difference between a heat load to which a refrigeration cycle is subject and a target blowoff temperature.

### DESCRIPTION OF THE PREFERRED EMBODIMENTS

Hereinafter, a description will be given, according to the drawings of working examples of a vehicle air conditioning apparatus according to the present invention.

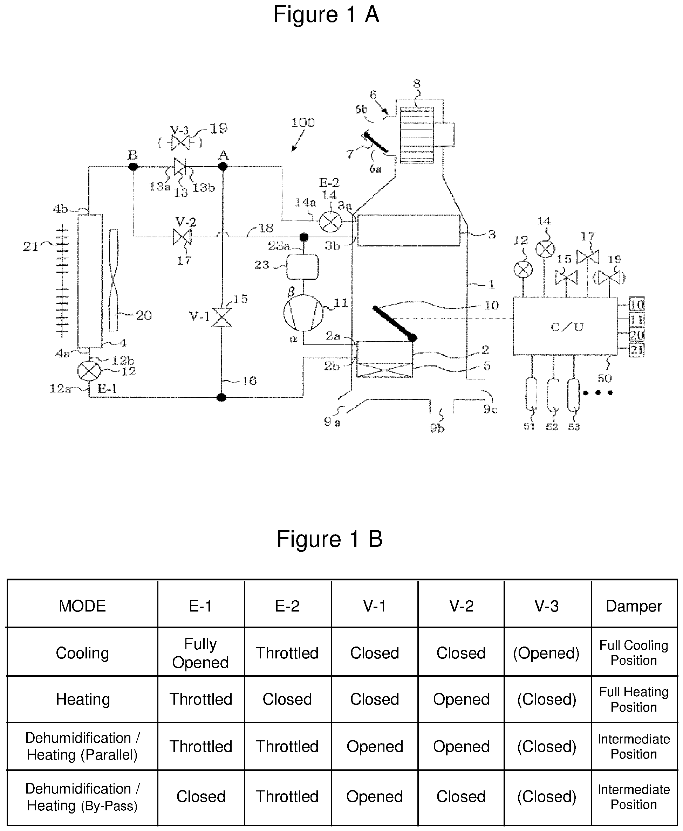

Figs. 1A and 1B show the vehicle air conditioning apparatus according to the present invention, and the vehicle air conditioning apparatus, being mounted on, for example, a motor vehicle, includes a first and a second heat exchanger 2, 3, which are disposed in an air conditioning unit 1, and a vehicle exterior heat exchanger 4 which, being disposed outside the air conditioning unit 1, can exchange heat with the outside air.

An inside/outside air switching device 6 is provided on the most upstream side of the air conditioning unit 1, and an inside air inlet 6a and an outside air inlet 6b are configured to be selectively opened by an intake door 7. The inside or outside air which is selectively led into the air conditioning unit 1 is configured to be sucked in by rotation of a blower 8, sent to the first and second heat exchangers 2, 3, heat exchanged therein, and supplied to the vehicle interior through a desired one of vents 9a to 9c.

The first heat exchanger 2 is disposed on the air flow direction downstream side, in the air conditioning unit 1, of the second heat exchanger 3, and a damper 10 is provided on the air flow direction upstream side of the first heat exchanger 2. The damper 10 is configured so that it can vary between a position (a heating position: a degree of opening of 100%) with the largest amount of air passing through the first heat exchanger 2 and a position (a cooling position: a degree of opening of 0%) with the smallest amount of air passing through the first heat exchanger 2, and that it adjusts the degree of opening and thereby can adjust the ratio between the air passing through the first heat exchanger 2 and the air bypassing the first heat exchanger 2.

The damper 10 is also called an air mix door. Also, in this example, an electrothermal heating device (PTC) 5 is disposed on the downstream side of the first heat exchanger 2 in the air conditioning unit 1.

A refrigerant inflow side 2a of the first heat exchanger 2 is connected to a discharge side α of a compressor 11, and a refrigerant outflow side 2b of the first heat exchanger 2 is connected to an inflow side 12a of a first expansion device (E-1) 12. Also, a refrigerant outflow side 3b of the second heat exchanger 3 is connected to an intake side β of the compressor 11 via an accumulator 23. The first heat exchanger 2 is also called an interior heat dissipator or an inner condenser.

An outflow side 12b of the first expansion device 12 is connected to a refrigerant inflow side 4a of the vehicle exterior heat exchanger 4, and a refrigerant outflow side 4b of the vehicle exterior heat exchanger 4 is connected to a refrigerant inflow side 3a of the second heat exchanger 3 via a check valve 13 and a second expansion device (E-2) 14. Consequently, a refrigeration cycle is formed wherein the compressor 11, the first heat exchanger 2, the first expansion device 12, the vehicle exterior heat exchanger 4, the check valve 13, the second expansion device 14, the second heat exchanger 3, the accumulator 23, and the compressor 11 are connected to a loop in this order.

Also, the refrigerant flow path between the refrigerant outflow side 2b of the first heat exchanger 2 and the inflow side 12a of the first expansion device 12 and the refrigerant flow path between an outflow side 13b of the check valve 13 and an inflow side 14a of the second expansion device 14 are connected together by a first bypass flow path 16 having a first on/off valve (V-1: equivalent to a first refrigerant control section) 15.

Furthermore, the refrigerant flow path between the refrigerant outflow side 4b of the vehicle exterior heat exchanger 4 and an inflow side 13a of the check valve 13 and the refrigerant flow path between the refrigerant outflow side 3b of the second heat exchanger 3 and an inflow side 23a of the accumulator 23 are connected together by a second bypass flow path 18 which is opened/closed by a second on/off valve (V-2: equivalent to a second refrigerant control section) 17.

Here, in the heretofore described configuration example, the first expansion device 12 uses an electromagnetic expansion valve which can narrow, close, and fully open the refrigerant flow path in response to an external control signal. Also, the second expansion device 14 uses an electromagnetic expansion valve which can narrow and close the refrigerant flow path in response to an external control signal. Also, the check valve 13 may be replaced with a third on/off valve (V-3) 19 which opens/closes the flow path. The check valve 13 and the third on/off valve (V-3) 19 are equivalent to a backflow prevention section.

Sign 20 is a vehicle exterior heat exchanger fan which, being provided opposite the ventilation path of the vehicle exterior heat exchanger 4, adjusts the amount of ventilation to the vehicle exterior heat exchanger 4, and sign 21 is an active grill shutter which, being disposed in front of the vehicle exterior heat exchanger 4, adjusts the amount of ventilation to the vehicle exterior heat exchanger 4.

The first and second expansion devices 12, 14, the opening/closing of the on/off valves 15, 17, 19, the degree of opening of the damper 10, the amount of discharge from the compressor 11, the speed of rotation of the vehicle exterior heat exchanger fan 20, and the degree of opening of the active grill shutter 21 are configured to be controlled by control signals from a control unit 50.

The control unit 50, being heretofore known per se, includes an input circuit including an A/D converter, a multiplexer, or the like, an arithmetic processing circuit including a ROM, a RAM, a CPU, or the like, and an output circuit including a drive circuit or the like, wherein the control unit 50, into which are inputted an outside air temperature signal from an outside air temperature sensor 51 which detects the temperature of vehicle exterior air (an outside air temperature), an inside air temperature signal from an inside air temperature sensor 52 which detects a vehicle interior temperature, an insolation signal from an insolation sensor 53 which detects the amount of insolation, a variety of signals which set operation modes, and the like, is configured to process these signals according to pre-set, predetermined programs.

In particular, the refrigeration cycle 100 switches between the operation modes thereof in response to the magnitude of a difference (Tm-Tset) between the state of a heat load to which the refrigeration cycle is subject (an aggregate signal (Tm) in which are factored the temperature of vehicle exterior air, the temperature of vehicle interior air, the amount of insolation, and the like) and a target blowoff temperature (Tset) in which is factored a desired interior temperature set by an occupant.

The refrigeration cycle 100 is configured to switch to a heating operation mode when the difference is smaller than a first predetermined value, switch to a cooling operation mode when the difference is larger than a second predetermined value which is set larger than the first predetermined value, and switch to a dehumidification operation mode when the difference is between the first and second predetermined values.

In this example, the dehumidification operation mode divides the region between the heating operation mode and the cooling operation mode largely into two modes, and when under a medium-low heat load wherein the heat load to which the refrigeration cycle is subject is relatively low, in order to enhance endothermic performance, one of the two modes is set to a dehumidification/heating operation mode (hereinafter referred to as a dehumidification/heating operation mode (Parallel)) in which to form two systems of flows which use the vehicle exterior heat exchanger 4 and the second heat exchanger 3 each as a heat absorber (in which to carry out a parallel operation to cause the refrigerant from the first heat exchanger 2 to flow in parallel to the vehicle exterior heat exchanger 4 and the second heat exchanger 3). Also, when under a medium-high heat load wherein the heat load to which the refrigeration cycle is subject is relatively high, the other mode is set to a dehumidification/heating operation mode (hereinafter referred to as a dehumidification/heating operation mode (By-Pass)) in which to use only the first heat exchanger 2 as a heat dissipator and to use only the second heat exchanger 3 as a heat absorber without utilizing the vehicle exterior heat exchanger 4 (in which to carry out a bypass operation to cause the refrigerant from the first heat exchanger 2 to flow bypassing the vehicle exterior heat exchanger 4).

Here, a series-flow dehumidification operation mode (a dehumidification/heating operation mode (Series) wherein in order to enhance exothermic performance, a refrigerant is caused to flow in series to the first heat exchanger 2 and the vehicle exterior heat exchanger 4 in order to dissipate heat in two steps with the first heat exchanger 2 and the vehicle exterior heat exchanger 4 used as heat dissipators), which is useful to be used when under a heat load wherein the heat load to which the refrigeration cycle is subject is relatively high, is not used, and a dehumidification operation is dealt with by only using the dehumidification/heating operation mode (Parallel) and the dehumidification/heating operation mode (By-Pass).

A description will hereinafter be given, in order to obtain the above individual operation modes, of specific examples of control actions of the control unit 50 for the expansion devices (the first and second expansion devices (E-1) 12 and (E-2) 14), the on-off valves (the first, second, and third on/off valves 15, 17, 19), and the damper 10.

In each of the operation modes, in response to an instruction from the control unit 50, the blower 8 rotates, and the air having passed through the inside/outside air switching device 6 is sent to the second heat exchanger 3, and subsequently flows toward the first heat exchanger 2.

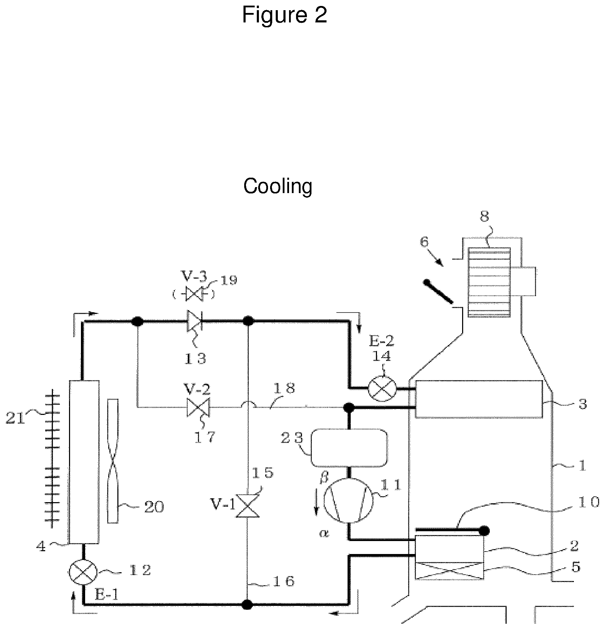

First, when the operation mode is set to the cooling operation mode, as also shown in Fig. 2, the control unit 50 fully opens the first expansion device (E-1) 12 and narrows the second expansion device (E-2) 14. Also, the control unit 50 closes the first and second on/off valves 15, 17, opens the on/off valve 19 when using the on/off valve 19 in place of the check valve 13, and sets the damper 10 to the cooling position (the position in which the degree of opening is 0%).

Then, a compressed refrigerant discharged from the discharge side α of the compressor 11, as no air passes through the first heat exchanger 2, passes through the first heat exchanger 2 without being heat dissipated therein, and furthermore, flows into the vehicle exterior heat exchanger 4 via the first expansion device 12. As the first expansion device 12 is fully open at this time, the refrigerant flows into the vehicle exterior heat exchanger 4 without being decompressed/expanded in the first expansion device 12, and after being heat dissipated (condensed into liquid) in the vehicle exterior heat exchanger 4, reaches the second expansion device 14 via the check valve 13 (or the third on/off valve 19), and the refrigerant is decompressed in the second expansion device 14 and flows into the second heat exchanger 3, and after being heat absorbed (evaporated into gas) in the second heat exchanger 3, is returned to the compressor 11 via the accumulator 23.

Therefore, the air having sent from the upstream side of the air conditioning unit 1 is cooled in the second heat exchanger 3, and bypassing the first heat exchanger 2, is directly supplied to the vehicle interior as cold air.

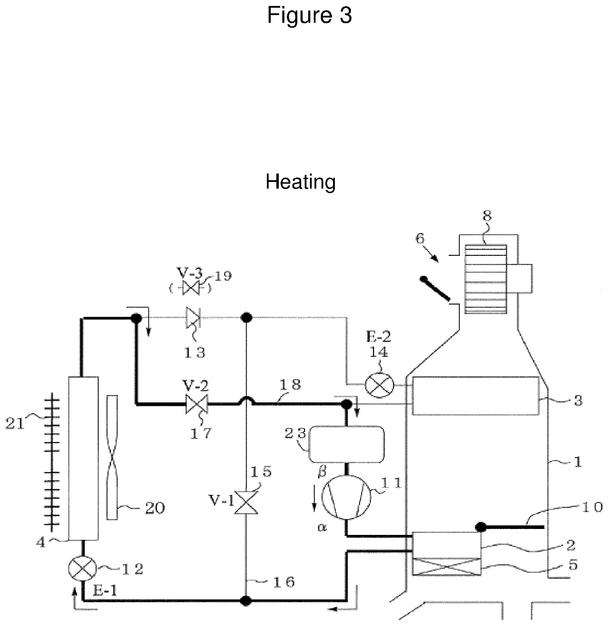

Next, when the operation mode is set to the heating operation mode, as also shown in Fig. 3, the control unit 50 narrows the first expansion device 12 and closes the second expansion device 14. Also, the control unit 50 closes the first on/off valve 15, opens the second on/off valve 17, closes the on/off valve 19 when using the on/off valve 19 in place of the check valve 13, and sets the damper 10 to the heating position (the position in which the degree of opening is 100%).

Then, the compressed refrigerant discharged from the discharge side α of the compressor 11 is heat dissipated (condensed into liquid) in the first heat exchanger 2, is decompressed in the first expansion device 12, and reaches the vehicle exterior heat exchanger 4, and after being heat absorbed (evaporated into gas) therein, the refrigerant passes through the second on/off valve 17 and is returned to the compressor 11 via the accumulator 23.

Therefore, the air sent from the upstream side of the air conditioning unit 1 passes through the second heat exchanger 3 but is not heat exchanged therein, and is all led to and heated in the first heat exchanger 2 and supplied to the vehicle interior as warm air.

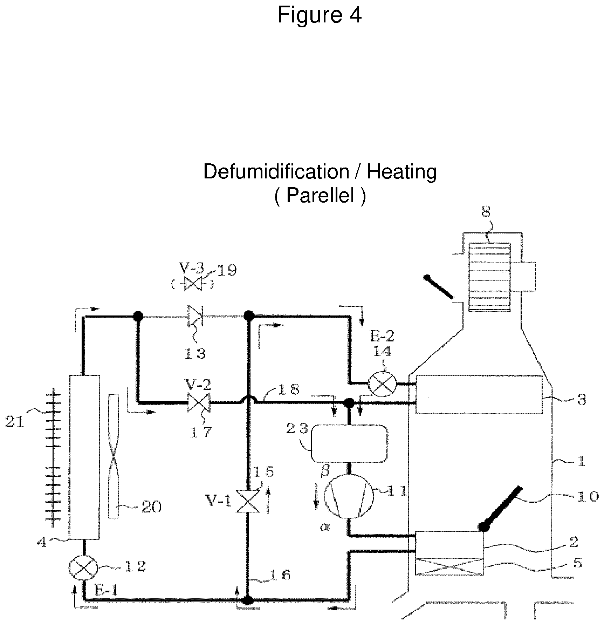

When the operation mode is set to the dehumidification/heating operation mode (Parallel), the control unit 50, as shown in Fig. 4, narrows the first and second expansion devices 12, 14, opens the first and second on/off valves 15, 17, closes the on/off valve 19 when using the on/off valve 19 in place of the check valve 13, and sets the degree of opening of the damper 10 to an arbitrary intermediate position.

Then, the compressed refrigerant discharged from the discharge side α of the compressor 11 is heat dissipated (condensed into liquid) in the first heat exchanger 2 and subsequently is branched into two, one of which reaches the second expansion device 14 through the first bypass flow path 16, and after being decompressed in the second expansion device 14 and heat absorbed (evaporated into gas) in the second heat exchanger 3, is returned to the compressor 11 via the accumulator 23. Also, at the same time, the other is decompressed in the first expansion device 12 and reaches the vehicle exterior heat exchanger 4, and after being heat absorbed (evaporated into gas) in the vehicle exterior heat exchanger 4, it passes through the second on/off valve 17 and is returned to the compressor 11 via the accumulator 23. Therefore, the air sent from the upstream side of the air conditioning unit 1 is dehumidified by the second heat exchanger 3 and heated when passing through the first heat exchanger 2, and is supplied to the vehicle interior as dry warm air.

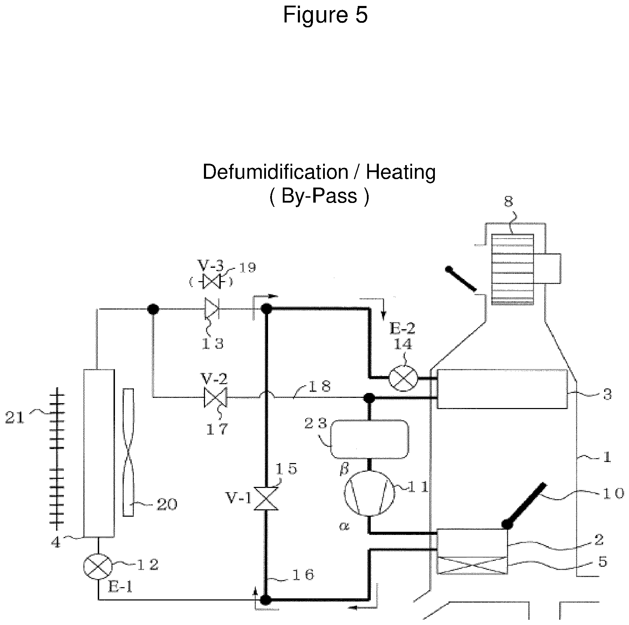

Next, when the operation mode is set to the dehumidification/heating operation mode (By-Pass), the control unit 50, as shown in Fig. 5, closes the first expansion device 12, narrows the second expansion device 14, opens the first on/off valve 15, closes the second on/off valve 17, closes the on/off valve 19 when using the on/off valve 19 in place of the check valve 13, and sets the degree of opening of the damper 10 to an arbitrary intermediate position.

Then, the compressed refrigerant discharged from the discharge side α of the compressor 11 is heat dissipated (condensed into liquid) in the first heat exchanger 2, reaches the second expansion device 14 after flowing through the first bypass flow path 16 bypassing the vehicle exterior heat exchanger 4, and is decompressed in the second expansion device 14 and supplied to the second heat exchanger 3. Then, the refrigerant, after being heat absorbed in the second heat exchanger 3, is returned to the compressor 11 via the accumulator 23.

Therefore, the air sent from the upstream side of the air conditioning unit 1 is dehumidified by the second heat exchanger 3, is heated when passing through the first heat exchanger 2, and is supplied to the vehicle interior as dry warm air.

The dehumidification performance in the dehumidification/heating operation mode (By-Pass) is higher than in the dehumidification/heating operation mode (Parallel) and lower than in the cooling operation mode.

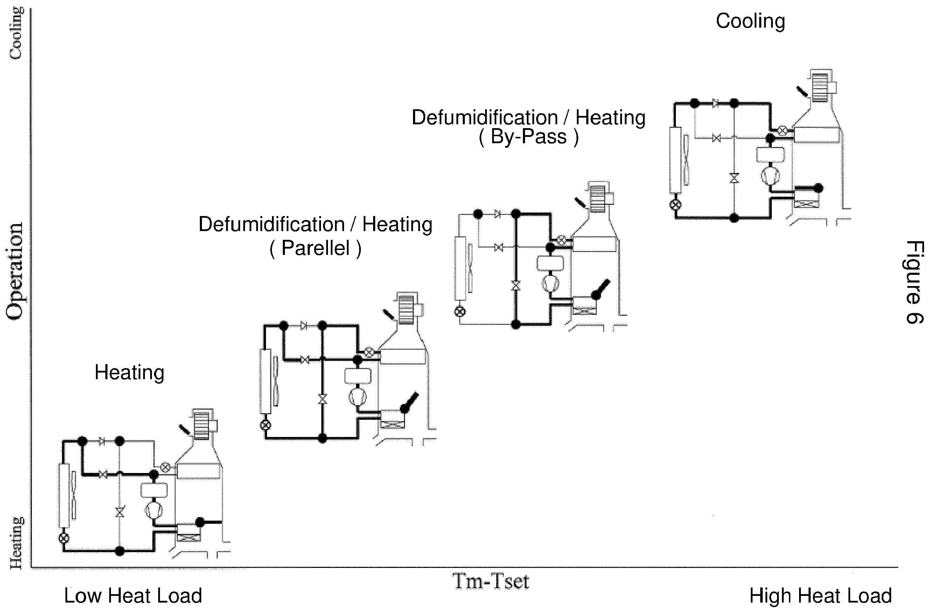

Consequently, in the above vehicle air conditioning apparatus, as shown in Fig. 6, a configuration is such that in the dehumidification operation mode, the dehumidification operation is covered by the dehumidification/heating operation mode (Parallel) and the dehumidification/heating operation mode (By-Pass) without carrying out the dehumidification/heating operation mode (Series) in which heat is dissipated in two steps with the first heat exchanger 2 and the vehicle exterior heat exchanger 4 used as heat dissipators, so that it is possible to secure a stable dehumidification operation even when the heat load to which the vehicle exterior heat exchanger 4 is subject changes, for example, even in such a case that a constant amount of heat dissipation cannot be secured in the vehicle exterior heat exchanger due to a change in vehicle speed or outside air temperature and thus to a change in the blown amount or the temperature of air supplied to the vehicle exterior heat exchanger.

In the heretofore described examples, a configuration is such that the dehumidification operation mode switches between the dehumidification/heating operation mode (Parallel) and the dehumidification/heating operation mode (By-Pass) in response to the magnitude of the difference (Tm-Tset) between the state of the heat load to which the refrigeration cycle is subject (the aggregate signal (Tm) in which are factored the temperature of vehicle exterior air, the temperature of vehicle interior air, the amount of insolation, and the like) and the target blowoff temperature (Tset) in which is factored a desired interior temperature set by an occupant, but a configuration may be such that the dehumidification operation mode uses only either one of the dehumidification/heating operation mode (Parallel) or the dehumidification/heating operation mode (By-Pass).

In the meantime, the above configuration is such that the region between a heat load region requiring the heating operation and a heat load region requiring the cooling operation is covered by the dehumidification/heating operation mode having one or both of the parallel operation (the dehumidification/heating operation mode: Parallel) and the bypass operation (the dehumidification/heating operation mode: By-Pass), but a configuration may be such that a dehumidification/cooling operation mode to be described hereinafter is further provided when the region cannot be fully covered only by the parallel and bypass operations, specifically, when a heat load region which cannot be fully covered exists between the heat load region covered by the bypass operation and the heat load region covered by the cooling operation, or in order to more appropriately dehumidify the region between the bypass operation and the cooling operation and to secure the dehumidification operation in the heat load region which the existing series-flow dehumidification operation mode has taken charge of.

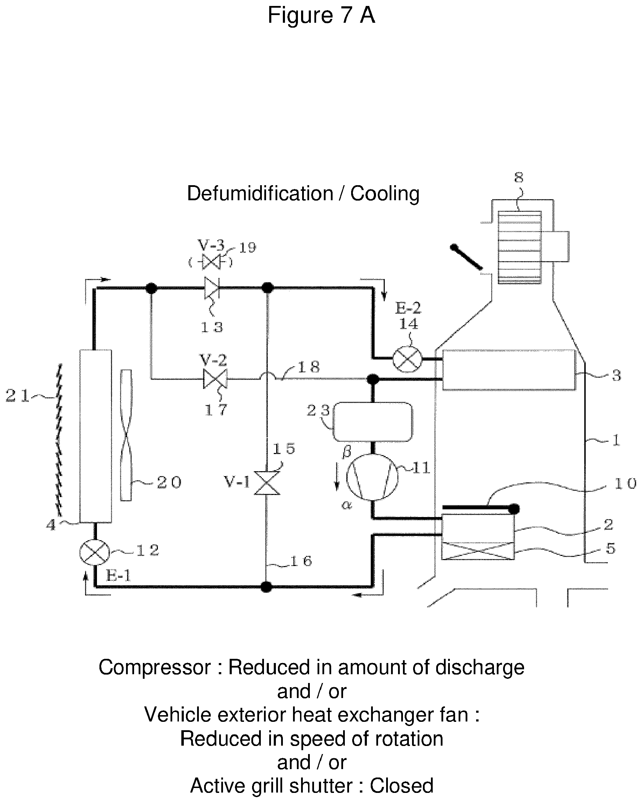

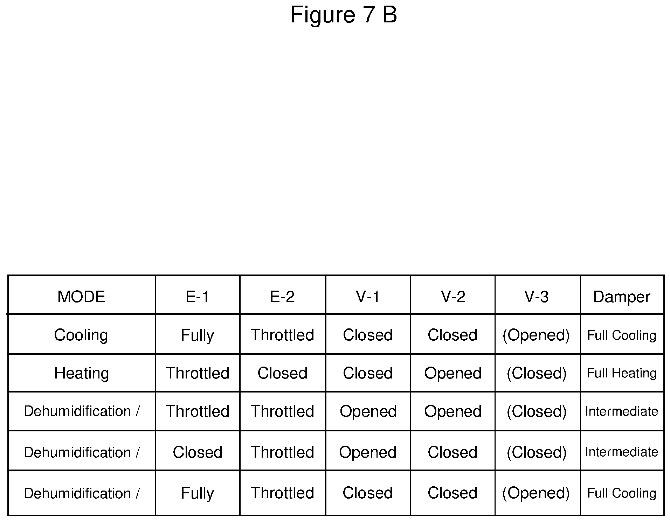

As one example thereof, a dehumidification/cooling operation mode as shown in Fig. 7 is added to the previously described cooling operation mode, heating operation mode, dehumidification/heating operation mode (Parallel), and dehumidification/heating operation mode (By-Pass). In the dehumidification/cooling operation mode, the control unit 50, in the same way as in the cooling operation mode, fully opens the first expansion device (E-1) 12 and narrows the second expansion device (E-2) 14. Also, the control unit 50 closes the first and second on/off valves 15, 17, opens the on/off valve 19 when using the on/off valve 19 in place of the check valve 13, and sets the damper 10 to the cooling position (the position in which the degree of opening is 0%). Thereafter, the endothermic performance in the second heat exchanger 3 is set lower than in the cooling operation mode, thereby setting the dehumidification performance to be higher than in the bypass operation (the dehumidification/heating operation mode: By-Pass) and lower than in the cooling operation.

A variety of ways can be considered in order to set the endothermic performance in the second heat exchanger 3 to be lower than in the cooling operation mode, but for example, at least one of the following controls can be carried out.
1. The amount of discharge from the compressor 11 is made smaller than in the cooling operation mode, thus reducing the amount of refrigerant circulated in the refrigeration cycle and reducing the endothermic performance in the second heat exchanger 3.
2. The speed of rotation of the vehicle exterior heat exchanger fan 20 is made lower than when in the cooling operation mode, and the amount of ventilation to the vehicle exterior heat exchanger 4 is reduced, thereby reducing cooling performance (reducing the endothermic performance in the second heat exchanger 3).
3. The degree of opening of the active grill shutter 21 is reduced (closed), thereby reducing the amount of ventilation to the vehicle exterior heat exchanger 4 and reducing cooling performance (reducing the endothermic performance in the second heat exchanger 3).

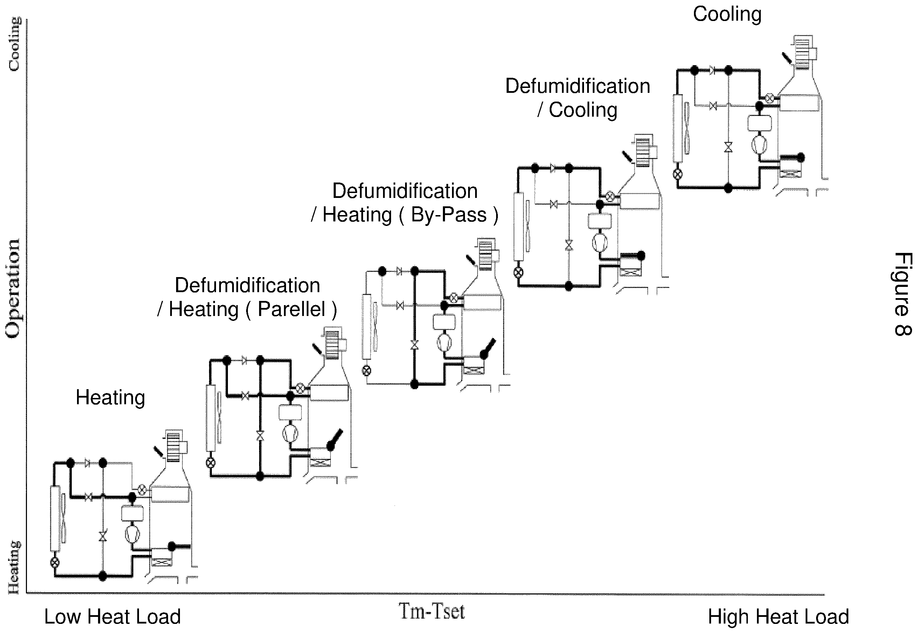

Consequently, in the above vehicle air conditioning apparatus, as shown in Fig. 8, a configuration is such that a first dehumidification/cooling operation (an operation in which the endothermic performance in the second heat exchanger 3 is made lower than in the cooling operation mode with the damper 10 set to the cooling position (the position in which the degree of opening is 0%)) in place of the heretofore known series-flow dehumidification/cooling operation is added between the cooling operation mode and the dehumidification/heating operation mode (By-Pass), so that when a heat load region which cannot be fully covered exists between the heat load region covered by the bypass operation and the heat load region covered by the cooling operation, or when it is desired to more appropriately carry out the dehumidification operation between the bypass operation and the cooling operation, it is possible to carry out dehumidification/cooling without utilizing the existing series-flow dehumidification operation mode, and even when the heat load to which the vehicle exterior heat exchanger 4 is subject changes, there is no more problem in that the temperature of air blown off into the vehicle interior fluctuates greatly, or there is no more problem in that the damper 10 swings frequently to suppress a change in the temperature of air blown off into the vehicle interior, and it is thus possible to secure a stable dehumidification operation.

The above configuration is such as to add the dehumidification/cooling operation mode (the first dehumidification/cooling operation mode) in which the refrigerant discharged from the compressor 11, without being heat dissipated in the first heat exchanger 2, is heat dissipated in the vehicle exterior heat exchanger 4, and the heat dissipated refrigerant, after being decompressed, is heat absorbed in the second heat exchanger 3, and in which the endothermic performance in the second heat exchanger 3 is made lower than in the cooling operation mode, and thus to switch between the operation modes in response to the difference between the heat load to which the refrigeration cycle 100 is subject and the target blowoff temperature, but a configuration may be such as, in place of this kind of first dehumidification/cooling operation mode, to add a dehumidification/cooling operation mode (a second dehumidification/cooling operation mode) in which the refrigerant discharged from the compressor 11 is heat dissipated in the first heat exchanger 2, and the heat dissipated refrigerant is branched into two, one of which, after being decompressed, is heat absorbed in the second heat exchanger 3, and the other of which is decompressed after being heat dissipated in the vehicle exterior heat exchanger 4.

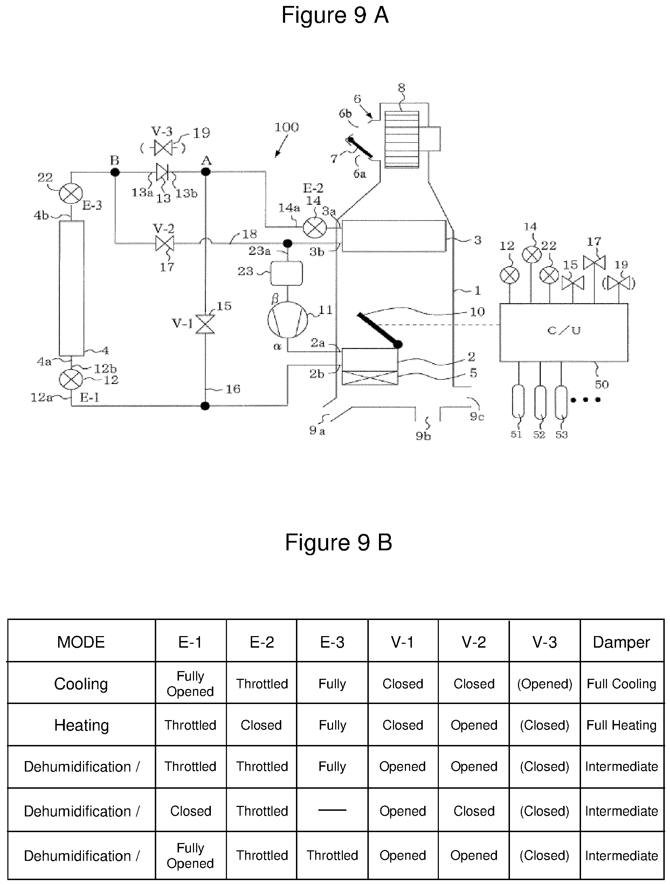

In order to realize this kind of second dehumidification/cooling operation mode, a refrigeration cycle (a heat pump cycle) 100 as shown in Figs. 9A and 9B can be used.

The refrigeration cycle is such that, in the cycle configuration shown in Figs. 1A and 1B, a third expansion device 22 which can narrow and fully open the refrigerant flow path is provided in a portion, on the upstream side of a bifurcation (B) to the second bypass flow path 18, of the refrigerant flow path between the vehicle exterior heat exchanger 4 and the check valve 13 (or the third on/off valve 19), wherein a configuration is such that the third expansion device 22 is fully opened in the cooling operation mode, the heating operation mode, and the dehumidification/heating operation mode (Parallel) and throttled in the dehumidification/cooling operation mode.

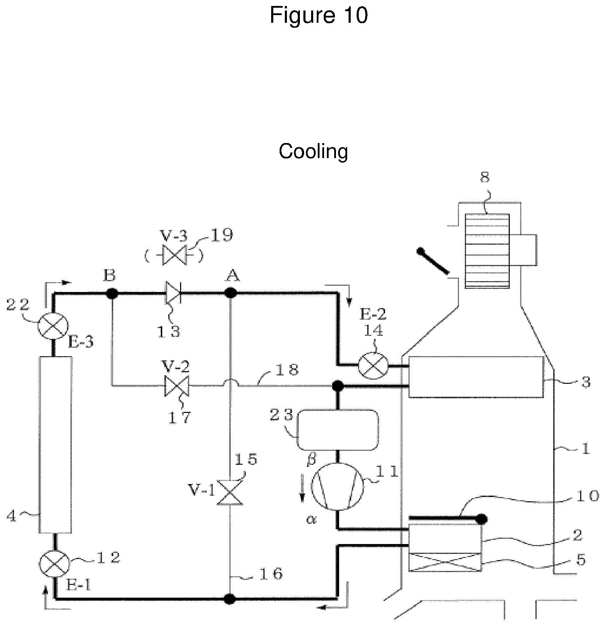

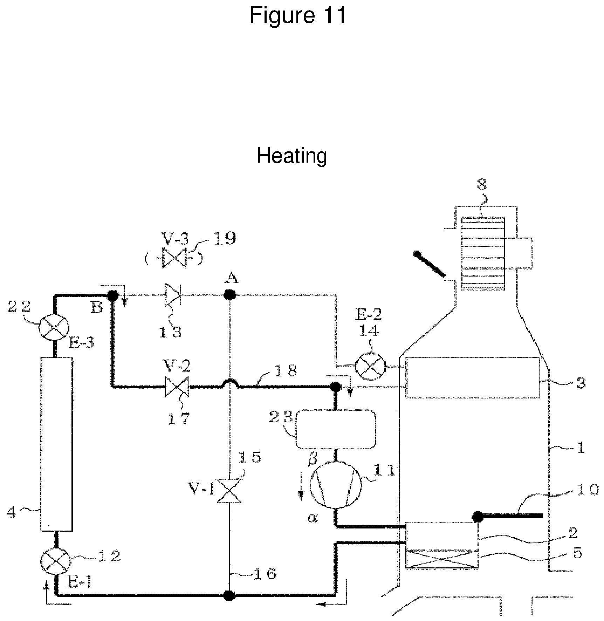

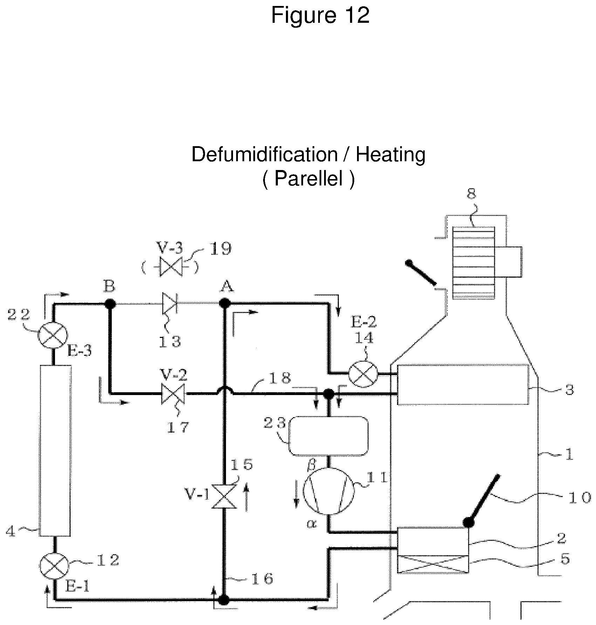

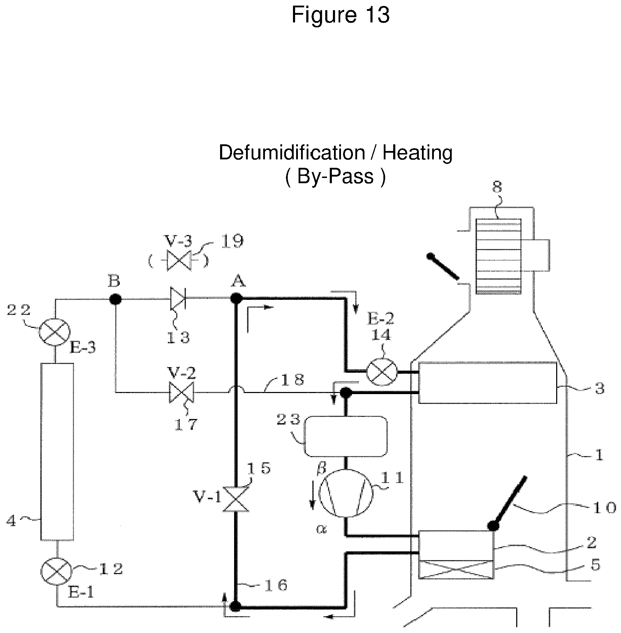

Consequently, in this kind of configuration, the same working effects as in the cooling operation mode shown in Fig. 2 can be obtained in the cooling operation mode shown in Fig. 10, the same working effects as in the heating operation mode shown in Fig. 3 can be obtained in the heating operation mode shown in Fig. 11, the same working effects as in the dehumidification/heating operation mode (Parallel) shown in Fig. 4 can be obtained in the dehumidification/heating operation mode (Parallel) shown in Fig. 12, and the same working effects as in the dehumidification/heating operation mode (By-Pass) shown in Fig. 5 can be obtained in the dehumidification/heating operation mode (By-Pass) shown in Fig. 13.

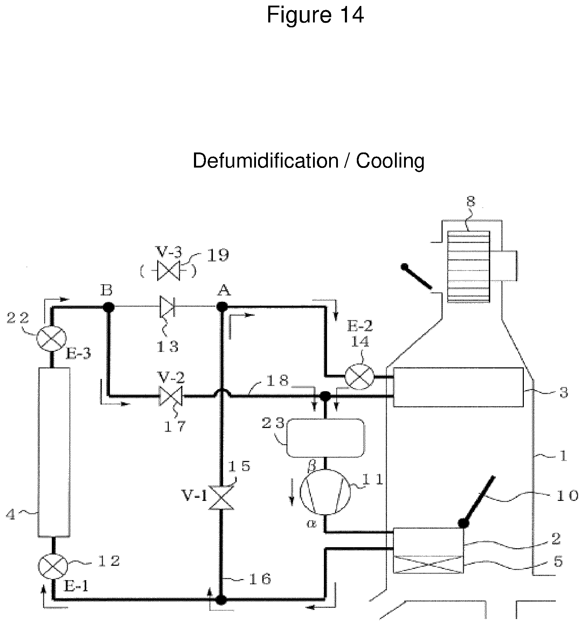

As opposed to this, when the operation mode is set to the dehumidification/cooling operation mode, the control unit 50, as shown in Fig. 14, fully opens the first expansion device 12, narrows the second expansion device 14, narrows the third expansion device 22, opens the first on/off valve 15, opens the second on/off valve 17, closes the on/off valve 19 when using the on/off valve 19 in place of the check valve 13, and sets the degree of opening of the damper 10 to an arbitrary intermediate position.

Then, the compressed refrigerant discharged from the discharge side α of the compressor 11 is heat dissipated (condensed into liquid) in the first heat exchanger 2 and subsequently is branched into two, one of which, after flowing through the first bypass flow path 16 bypassing the vehicle exterior heat exchanger 4, reaches the second expansion device 14, and is decompressed in the second expansion device 14 and supplied to the second heat exchanger 3. Then, the refrigerant, after being heat absorbed in the second heat exchanger 3, is returned to the compressor 11 via the accumulator 23.

Also, the other branched, without being decompressed in the first expansion device 12, flows into the vehicle exterior heat exchanger 4 and is heat dissipated therein, and subsequently, after being decompressed in the third expansion device 22, is returned to the compressor 11 via the accumulator 23.

Consequently, by using the heretofore described refrigeration cycle 100, when in the dehumidification/cooling operation, one portion of the refrigerant discharged from the compressor is caused to flow into the vehicle exterior heat exchanger 4 and heat dissipated therein, so that it is possible to make the amount of heat dissipation larger than in the dehumidification/heating operation mode (By-Pass) and also to make the amount of heat dissipation smaller than in the cooling operation mode, enabling the dehumidification operation which complements the region therebetween.

Also, when in the dehumidification/cooling operation, even though the amount or the temperature of air supplied to the vehicle exterior heat exchanger 4 is changed as needed, one portion of the refrigerant having passed through the first heat exchanger 2 is supplied to the second heat exchanger 3 bypassing the vehicle exterior heat exchanger 4, so that even though the heat dissipation performance in the vehicle exterior heat exchanger 4 is changed, the change makes no immediate impact upon the heat exchanger (the second heat exchanger 3) in the air conditioning unit, or it is possible, even when the change impacts thereon, to reduce the impact. Therefore, it is possible to secure a stable dehumidification operation.

In the above embodiments, the present invention may be appropriately modified without departing from the object of the present invention. For example, a configuration is such that the difference between the heat load to which the refrigeration cycle 100 is subject and the target blowoff temperature is used as an index at which to switch between the operation modes of the refrigeration cycle is used, but the outside air temperature, the cooling temperature of the second heat exchanger 3, or the like may be used as a representative of the heat load to which the refrigeration cycle 100 is subject.

### Description of Reference Numerals and Signs

- 1:: air conditioning unit
- 2:: first heat exchanger
- 3:: second heat exchanger
- 4:: vehicle exterior heat exchanger
- 11:: compressor
- 12:: first expansion device
- 13:: check valve
- 14:: second expansion device
- 15:: first on/off valve (V-1)
- 16:: first bypass flow path
- 17:: second on/off valve (V-2)
- 18:: second bypass flow path
- 19:: third on/off valve (V-3)
- 20:: vehicle exterior heat exchanger fan
- 21:: active grill shutter
- 22:: third expansion device

## Claims

1. A vehicle air conditioning apparatus, comprising:
a refrigeration cycle (100); and
a control unit (50) which controls switching between operation modes of the refrigeration cycle (100),
the refrigeration cycle (100) including at least:
a compressor (11) which compresses a refrigerant;
a first heat exchanger (2) which is disposed in an air conditioning unit (1) and a damper (10) of which adjusts an amount of ventilation;
a second heat exchanger (3) which, being disposed in the air conditioning unit (1), is disposed on an air flow direction upstream side, in the air conditioning unit, of the first heat exchanger (2); and
a vehicle exterior heat exchanger (4) which, being disposed outside the vehicle interior, can exchange heat with the outside air, wherein
the control unit (50), in response to the difference between a heat load to which the refrigeration cycle (100) is subject and a target blowoff temperature, can switch between any operation modes out of:
a heating operation mode in which a refrigerant discharged from the compressor (11) is heat dissipated in the first heat exchanger (2), and the heat dissipated refrigerant, after being decompressed, is heat absorbed in the vehicle exterior heat exchanger (4) and not heat absorbed in the second heat exchanger (3);
a dehumidification/heating operation mode which has one or both of two operations, a parallel operation in which the refrigerant discharged from the compressor (11) is heat dissipated in the first heat exchanger (2), and the heat dissipated refrigerant is branched into two, one of which, after being decompressed, is heat absorbed through the second heat exchanger (3), and the other of which, after being decompressed, is heat absorbed in the vehicle exterior heat exchanger (4), and a bypass operation in which the refrigerant discharged from the compressor (11) is heat dissipated in the first heat exchanger (2), and the heat dissipated refrigerant, without being branched and after being decompressed, is heat absorbed only in the second heat exchanger (3); and
a cooling operation mode in which the refrigerant discharged from the compressor (11), without being heat dissipated in the first heat exchanger (2), is heat dissipated in the vehicle exterior heat exchanger (4), and the heat dissipated refrigerant, after being decompressed, is heat absorbed in the second heat exchanger (3).

2. The vehicle air conditioning apparatus according to claim 1, further comprising:
a first dehumidification/cooling operation mode in which the refrigerant discharged from the compressor (11), without being heat dissipated in the first heat exchanger (2), is heat dissipated in the vehicle exterior heat exchanger (4), and the heat dissipated refrigerant, after being decompressed, is heat absorbed in the second heat exchanger (3), and in which the endothermic performance in the second heat exchanger (3) is made lower than in the cooling operation mode, wherein
the control unit (50) can switch between any of the operation modes in response to the difference between the heat load to which the refrigeration cycle (100) is subject and the target blowoff temperature.

3. The vehicle air conditioning apparatus according to claim 2, wherein
a unit which makes the endothermic performance in the second heat exchanger (3) lower than in the cooling operation executes at least one of controls to:
make the amount of discharge from the compressor (11) smaller than in the cooling operation mode;
make the speed of rotation of a fan (20) which adjusts the amount of ventilation to the vehicle exterior heat exchanger (4) lower than in the cooling operation mode; and
make the degree of opening of an active grill shutter (21) which adjusts the amount of ventilation to the vehicle exterior heat exchanger (4) lower than in the cooling operation mode.

4. The vehicle air conditioning apparatus according to claim 1, further comprising:
a second dehumidification/cooling operation mode in which the refrigerant discharged from the compressor (11) is heat dissipated in the first heat exchanger (2), and the heat dissipated refrigerant is branched into two, one of which, after being decompressed, is heat absorbed in the second heat exchanger (3), and the other of which is decompressed after being heat dissipated in the vehicle exterior heat exchanger (4), wherein
the control unit (50) can switch between any of the operation modes in response to the difference between the heat load to which the refrigeration cycle (100) is subject and the target blowoff temperature.

5. The vehicle air conditioning apparatus according to claim 4, wherein
the refrigeration cycle (100) has a first expansion device (12) which can narrow, close, and fully open a refrigerant flow path and a second expansion device (14) which can narrow and close a refrigerant flow path, wherein
the compressor (11), the first heat exchanger (2), the first expansion device (12), the vehicle exterior heat exchanger (4), the second expansion device (14), and the second heat exchanger (3) are connected to a loop at least in this order, wherein
a refrigerant flow path between the first heat exchanger (2) and the first expansion device (12) and a refrigerant flow path between the vehicle exterior heat exchanger (4) and the second expansion device (14) are connected via a first bypass flow path (16) including a first refrigerant control section (15), wherein
a backflow prevention portion (13, 19) which stops the flow of refrigerant to the upstream side from a confluence (A) with the first bypass flow path (16) is provided in a portion, on the upstream side of the confluence (A), of the refrigerant flow path between the vehicle exterior heat exchanger (4) and the second expansion device (14), and a refrigerant flow path between the vehicle exterior heat exchanger (4) and the backflow prevention portion (13, 19) and a refrigerant flow path between the second heat exchanger (3) and the compressor (11) are connected via a second bypass flow path (18) including a second refrigerant control section (17), and wherein
a third expansion device (22) which can narrow and fully open a refrigerant flow path is provided in a portion, on the upstream side of a bifurcation (B) to the second bypass flow path (18), of the refrigerant flow path between the vehicle exterior heat exchanger (4) and the backflow prevention portion (13, 19).
